# FASCICULE DE BREVET EUROPEEN

(11) **EP 1 576 856 B1**
(45) Date de publication et mention de la délivrance du brevet: **19.05.2010**
(21) Numéro de dépôt: 03813939.0
(22) Date de dépôt: 24.12.2003
(51) Int. Cl.: H05B 3/36, F24D 13/02

(54) **NAPPE SOUPLE DE CHAUFFAGE ET SON PROCEDE DE FABRICATION**
FLEXIBLE HEIZMATTE UNDHERSTELLUNGSVERFAHREN DAFÜR
FLEXIBLE HEATING MAT AND PRODUCTION METHOD THEREOF

(30) Priorité: 24.12.2002 FR 0216628
(43) Date de publication de la demande: 21.09.2005
(73) Titulaire: Scherrer, Jean-Paul, 68100 Mulhouse (FR); Sherrer, Jean-Marc, 68400 Riedisheim (FR)
(72) Inventeur: SCHERRER, Jean-Paul, F-68100 Mulhouse (FR); SHERRER, Jean-Marc, F-68400 Riedisheim (FR); BEISSER, Jean-Claude, F-05520 l'Argentière La Bessée (FR)
(74) Mandataire: Puiroux, Guy
(86) Numéro de dépôt international: PCT/FR2003/003903
(87) Numéro de publication internationale: WO 2004/060019

(56) Documents cités:
- FR-A- 2 365 268
- US-A- 3 263 307
- US-A- 3 584 198

## Description

La présente invention concerne un dispositif de chauffage notamment d'un sol, d'un plafond ou d'une paroi d'un local, ce dispositif de chauffage se présentant sous la forme d'une nappe souple et étanche, apte à être découpée à la longueur voulue par l'utilisateur en fonction des besoins de celui-ci. La présente invention concerne également un procédé de fabrication d'une telle nappe souple de chauffage.

On a déjà proposé dans l'état antérieur de la technique des dispositifs de chauffage de ce type constitués de deux feuilles support en matériau souple isolant et étanche entre lesquelles est fixée une bande métallique conductrice et résistive qui est pliée de façon à former des lignes successives séparées par un espace donné. Cette bande est alimentée en courant électrique à chacune de ses extrémités et fournit ainsi une puissance électrique de chauffage qui est fonction de sa longueur, de sa résistivité, et de sa tension d'alimentation.

Ainsi, on connaît un élément de chauffage électrique mince flexible tel que celui divulgué dans la demande de brevet US 3 263 307. Ledit élément consiste en une pellicule de résistance suivant des enroulements sinueux des bandes entre deux couches interconnectées de feuille isolante, flexible. L'un des objets de la demande est de prévoir une méthode pour fabriquer en continu une succession d'éléments qui seront ensuite séparés par découpe. L'inconvénient de ce type d'élément est qu'il a une longueur fixe et qu'il ne peut donc pas s'adapter aux besoins.

De même, on connaît un élément de chauffage de surface tel que celui divulgué dans la demande de brevet FR 2 365 268. Ledit élément de chauffage présente, entre deux couches isolantes en forme de bandes, en particulier deux feuilles, plusieurs zones de chauffage se succédant dans la direction longitudinale des bandes et étant munies de conducteurs chauffants coudés dans le plan de la surface et de conducteurs de branchement desdits conducteurs chauffants, les conducteurs chauffants ayant un parcours sinueux dans les zones de chauffage. De plus, il est prévu, entre les zones de chauffage, des zones de détente et de coupe dans la direction longitudinale des bandes. Cet élément nécessite l'utilisation de connecteurs de branchement et ne permet pas d'adapter la longueur dudit élément selon les besoins.

Un inconvénient des techniques de chauffage précitées est qu'elles nécessitent une fabrication en usine qui est spécifique de chaque dimension particulière des panneaux chauffants souhaités.

La présente invention a pour but de proposer une nappe de chauffage de ce type qui d'une part est facile et rapide à produire en usine, et qui d'autre part permet à son utilisateur de l'adapter à ses besoins propres par une simple opération de découpage et de connexion.

Dans ces conditions, l'utilisateur disposera d'un dispositif de chauffage constitué d'une nappe enroulée possédant une largeur déterminée qu'il pourra découper à sa guise afin de disposer de la longueur souhaitée. Il pourra également disposer les lés côte à côte lorsque la largeur de la surface d'utilisation sera supérieure à celle d'un lé.

La présente invention a ainsi pour objet une nappe de chauffage longitudinale souple de longueur L entre une extrémité amont et une extrémité aval, ladite nappe comprenant une première et une seconde piste emprisonnées entre deux feuilles souples électriquement isolantes, lesdites pistes étant formées d'un film métallique et étant destinées à être alimentées en courant électrique pour être chauffées, lesdites pistes se distribuant périodiquement dans le sens longitudinal, caractérisée en ce que :
- chaque piste comporte une extrémité amont au niveau de l'extrémité amont de la nappe et une extrémité aval au niveau de l'extrémité aval de la nappe,
- les première et seconde pistes s'étendent de façon associée transversalement sur la quasi totalité de la largeur de la nappe et
- les extrémités aval des deux pistes sont libres et destinées à être réunies l'une à l'autre, avant utilisation, par des moyens de connexion.

Suivant l'invention les pistes s'étendent de façon associée transversalement, en ce sens que la largeur, dans le sens transversal, de la somme de ces deux pistes est sensiblement égale à la largeur de la nappe.

Dans un premier mode de mise en oeuvre de l'invention les première et seconde pistes formeront des demi-boucles successives qui seront imbriquées les unes dans les autres de façon que, dans le sens longitudinal, on rencontre successivement, de l'extrémité amont à l'extrémité aval de la nappe, une première piste, puis une alternance de deux secondes pistes et deux premières pistes.

Les pistes pourront également former des demi-boucles successives constituées de parties transversales et de parties longitudinales de plus faible longueur, la partie transversale de l'une des pistes étant complétée à la valeur de la largeur de la nappe par une partie transversale adjacente de l'autre piste. Préférentiellement la configuration des pistes sera telle qu'elles s'étendront de façon successive transversalement et longitudinalement d'une extrémité à l'autre de la nappe tout en restant parallèles entre elles.

La fixation des deux pistes sur les feuilles support pourra notamment être assurée au moyen d'un adhésif préférentiellement de type repositionnable.

Afin de favoriser la fixation de la nappe suivant l'invention, notamment dans des dalles, les deux feuilles souples et isolantes pourront être traversées par des orifices disposés entre les pistes.

Le film métallique utilisé sera préférentiellement constitué d'aluminium, et la largeur des pistes sera préférentiellement de l'ordre de 2,5 cm, leur épaisseur étant de l'ordre de 0,25 mm. Préférentiellement l'écartement des pistes dans le sens longitudinal sera de l'ordre de 1,5 cm, et dans le sens transversal de l'ordre de 1cm.

Par ailleurs afin de favoriser la mise en place des moyens de connexion, l'une des feuilles souples et isolantes pourra être percée d'un orifice donnant accès aux deux extrémités des pistes. Cet orifice d'accès permettra d'assurer la connexion électrique de cette piste avec un conducteur de préférence un conducteur plat.

Dans un mode de mise en oeuvre de l'invention tout particulièrement intéressant on pourra concevoir la géométrie des pistes de façon telle que la décortique, c'est-à-dire la partie de la bande métallique restant après le découpage, puisse elle-même constituer une nappe chauffante. A cet effet on concevra la géométrie des pistes de façon que la nappe intermédiaire comprenne deux séries de pistes associées deux à deux, si bien que l'on rencontrera successivement, en alternance d'une extrémité à l'autre de la nappe, deux premières pistes de la première série, une première piste de la seconde série, une seconde piste de la première série, deux secondes pistes de la seconde série, une seconde piste de la première série, et une première piste de la seconde série.

La présente invention a également pour objet un procédé de fabrication d'une nappe souple de chauffage se présentant sous la forme d'une bande longitudinale formant un lé de largeur déterminée, constituée de deux pistes conductrices alimentées en courant électrique par leurs extrémités amont respectives et qui sont emprisonnées entre deux feuilles support souples et isolantes, caractérisé en ce qu'il comporte les étapes consistant à :
- fixer une feuille métallique souple sur une feuille support souple et isolante électriquement,
- découper la feuille métallique sur au moins son épaisseur, de façon à former dans celle-ci deux pistes chauffantes, les extrémités amont de ces pistes étant destinées à être reliées à des bornes d'alimentation respectives en courant électrique, et les extrémités aval de ces éléments étant libres et destinées à être réunies l'une à l'autre, avant utilisation, par des moyens de connexion,
- éliminer la décortique résultant de cette découpe,
- fixer une seconde feuille support souple et isolante sur l'autre face des pistes de façon que celles-ci soient prises en sandwich entre les deux feuilles support.

Suivant l'invention on pourra extraire la décortique en exerçant sur celle-ci une simple traction ou, lorsque celle-ci est fragile, en collant sur cette dernière une feuille souple d'arrachage revêtue d'une colle possédant un pouvoir adhésif supérieur à celui de la feuille métallique sur la feuille support.

Préférentiellement on effectuera au moins l'étape de découpe à l'aide d'une machine rotative travaillant en continu.

On décrira ci-après, à titre d'exemple non limitatif, une forme d'exécution de la présente invention, en référence au dessin annexé sur lequel :
- la figure 1 est une vue en plan d'un exemple de mise en oeuvre d'une nappe souple de chauffage suivant l'invention ;
- la figure 2 est une variante de réalisation de la nappe de chauffage souple suivant l'invention représentée sur la figure 1 ;
- les figures 3a à 3d sont des vues schématiques montrant les différentes étapes d'un exemple de procédé de réalisation de la nappe souple de chauffage suivant l'invention ;
- la figure 4 est une vue en plan d'un autre mode de mise en oeuvre d'une nappe souple de chauffage suivant l'invention.
- Les figures 5 et 6 sont des vues en plan partielles de deux variantes de mise en oeuvre de l'invention.

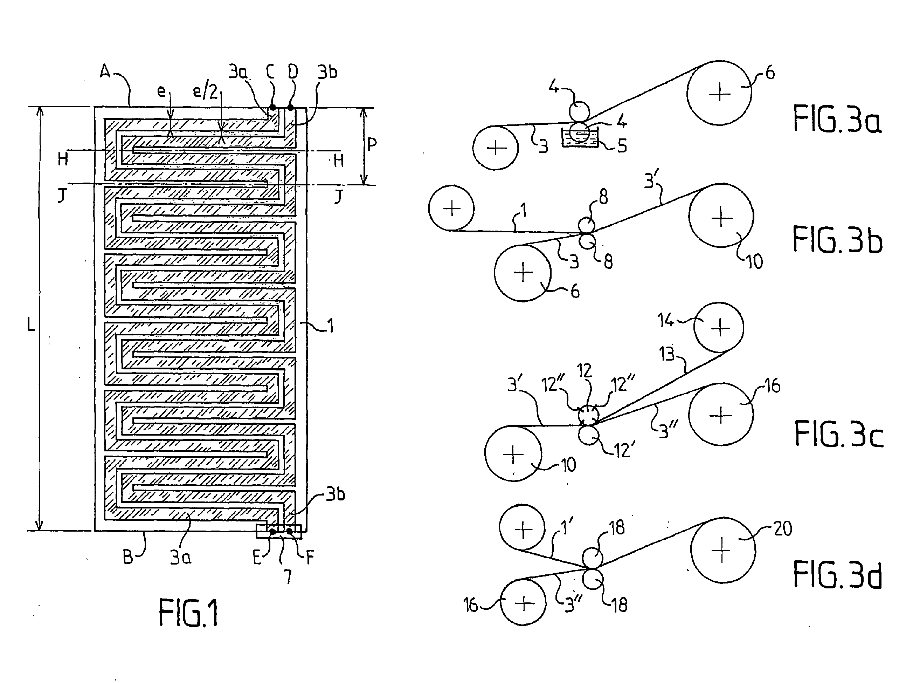

La nappe souple de chauffage suivant l'invention qui est représentée sur la figure 1, se compose d'une feuille support 1 qui est constituée d'une bande longitudinale enroulée, réalisée dans un matériau souple et isolant électriquement tel que notamment un film de polychlorure de vinyle (dit ci-après PVC) dont l'épaisseur est d'environ 0,25 mm et la largeur est de l'ordre de 1,5 m, sur laquelle on a fixé, notamment au moyen d'une colle adhésive repositionnable, deux pistes conductrices du courant électrique 3a,3b, notamment des bandes métalliques d'une épaisseur de l'ordre de 0,5 mm et d'une largeur de 40 mm. Le métal conducteur utilisé sera par exemple de l'aluminium qui présente les avantages d'être d'une conductivité appropriée et de se prêter facilement à la réalisation de pistes de faible épaisseur en raison de sa bonne ductilité.

Les pistes conductrices 3a, 3b sont disposées de façon telle qu'elles s'étendent à la fois suivant la longueur de la feuille support 1 mais également suivant la quasi-totalité de la largeur de celle-ci mise à part une marge, de façon que la chaleur qui sera délivrée par ces pistes conductrices se distribue de façon uniforme sur la surface totale de la nappe.

Ainsi que représenté sur la figure 1, dans ce mode de mise en oeuvre de l'invention, les pistes 3a et 3b partent d'une extrémité amont A de la nappe pour aller vers l'extrémité aval B de celle-ci. Pour des raisons de diélectrique, on fait en sorte que l'espace compris entre deux pistes soit de l'ordre d'environ la moitié de la largeur e de celles-ci, soit une distance e/2. Tout au long de leur parcours, les deux pistes restent parallèles l'une à l'autre tout en maintenant entre elles un tel écartement e/2.

On constate ainsi que la configuration générale de ces pistes 3a,3b sur la feuille support 1 est de forme répétitive, la distance séparant, dans le sens de la longueur de la nappe, la même configuration de pistes constituant le pas P de celles-ci. La feuille support 1 et les pistes conductrices 3a, 3b sont recouvertes d'une autre feuille support souple et isolante électriquement dont la constitution peut par exemple être identique à celle de la feuille support 1, cette feuille pouvant être fixée sur la nappe 1 et sur les pistes conductrices 3a,3b par tout moyen approprié et notamment au moyen d'une colle adhésive.

La nappe de chauffage suivant l'invention peut être mise en oeuvre ainsi que décrit ci-après. Les deux extrémités amont C et D des pistes conductrices 3a, 3b sont respectivement réunies à deux bornes d'alimentation en courant électrique, préférentiellement un courant électrique basse tension, de l'ordre de 50 volts.

Les autres extrémités, ou extrémités aval E et F de ces pistes respectives sont quant à elles réunies entre elles par un pont conducteur 7, de façon à assurer la continuité électrique du circuit formé par les deux pistes 3a et 3b, la résistance interne.de ce circuit formant la résistance électrique de chauffage de la nappe.

En fonction de la surface et de la géométrie de la pièce que l'on souhaite chauffer, l'utilisateur aura la faculté de découper la nappe de chauffage à la longueur la plus proche de la longueur de la pièce formant un multiple entier du pas P.

On comprend, dans ces conditions, que la configuration de la disposition des pistes conductrices 3a,3b sur la feuille support 1 la plus intéressante sera celle permettant d'obtenir le pas P le plus réduit possible ce qui permettra à l'utilisateur d'obtenir une meilleure précision dans sa découpe.

La nappe souple de chauffage suivant l'invention est ainsi particulièrement intéressante en ce qu'elle permet une très grande adaptabilité en ce qui concerne la longueur de la pièce à chauffer. Bien entendu, en ce qui concerne la largeur de celle-ci, l'utilisateur aura la faculté de disposer côte à côte plusieurs bandes en fonction de cette largeur.

Une fois la longueur L de la nappe déterminée, l'utilisateur découpera celle-ci puis assurera ensuite la connexion des deux extrémités libres aval E et F afin d'assurer la continuité électrique, et ceci au moyen d'un pont conducteur 7 ou d'une soudure.

Dans le présent mode de mise en oeuvre de l'invention, la configuration représentée permet même à l'utilisateur de réaliser sa découpe suivant chaque demi-valeur P/2 du pas P(trait mixte H-H) ou suivant un pas entier (trait mixte J-J).

Le présent mode de mise oeuvre est intéressant en ce que d'une part il minimise la valeur du champ électrique créé par les pistes 3a,3b lorsqu'elles sont parcourues par un courant, et d'autre part, en raison de la simplicité de la configuration il permet une réalisation simple de l'outil de découpe, et notamment des filets réalisés sur un cylindre de découpe.

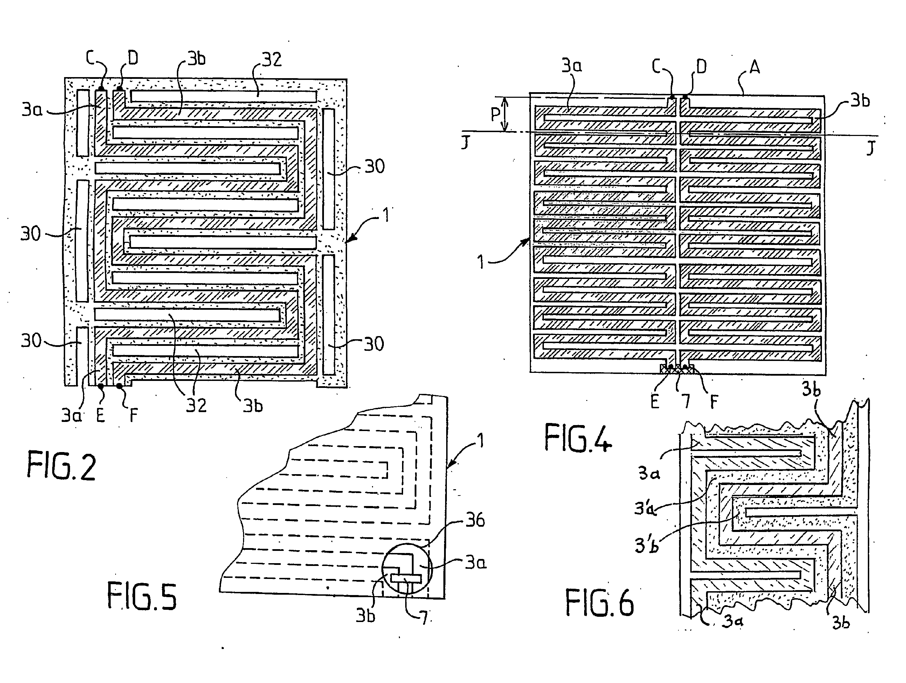

On peut, bien entendu suivant l'invention, adopter une autre configuration de disposition des pistes conductrices 3a et 3b sur la feuille support 1. Ainsi on a représenté sur la figure 2 une autre disposition de ces pistes dans laquelle, les deux pistes 3a et 3b s'étendent transversalement de façon associée, c'est-à-dire que la largeur dans le sens transversal des deux pistes mise bout à bout est égale à sensiblement la largeur de la nappe. Plus précisément les pistes 3a et 3b partent du milieu de l'extrémité amont A de la nappe pour ensuite s'éloigner l'une de l'autre et se diriger vers chacun des deux bords transversaux de celle-ci, pour ensuite se rapprocher du centre et repartir de nouveau vers les bords latéraux.

On a représenté sur cette figure 2 le pas P de cette configuration mettant en évidence les zones de découpe, c'est-à-dire là où l'utilisateur aura la possibilité de réaliser la découpe de la nappe, et de disposer des deux autres extrémités E,F des pistes conductrices 3a,3b, ou extrémité aval, qu'il pourra réunir facilement par une connexion afin de respecter la continuité du circuit électrique ainsi constitué.

La présente invention est également particulièrement intéressante en ce qu'elle se prête facilement à une fabrication industrielle permettant de réaliser une telle nappe souple de chauffage à des prix de revient tout particulièrement compétitifs.

Suivant le procédé selon l'invention, dont les différentes étapes sont représentées de façon schématique sur les figures 3a à 3d, on part tout d'abord d'une feuille métallique 3 en bande, notamment en aluminium, dont la largeur est sensiblement égale à la largeur de la nappe, ou lé, une fois terminée. On admet cette bande 3 entre deux cylindres 4 qui déposent sur celle-ci un film adhésif 5. La bande 3 ainsi traitée est ensuite enroulée de façon à former un rouleau 6.

Au cours de la seconde étape, représentée sur la figure 3b, on admet entre des cylindres presseurs 8 la bande métallique 3 précédemment recouverte de l'adhésif et la feuille support 1 en PVC, de façon à les solidariser l'une de l'autre, puis l'ensemble 3' est enroulé sur un rouleau 10.

Au cours de la troisième étape, représentée sur la figure 3c, on assure la découpe de la bande métallique 3 collée, sur la feuille support 1 en PVC de façon à former les pistes. Pour ce faire, la nappe 3' issue du rouleau 10 est admise entre deux cylindres, à savoir un cylindre de découpe 12 et sa contrepartie 12'. De façon connue, le cylindre de découpe 12 est pourvu de filets de découpe 12" qui reproduisent la configuration choisie des pistes représentées par exemple sur les figures 1 ou 2, la profondeur des filets de découpe 12" étant telle que seule la bande métallique est découpée au cours de cette opération. Des moyens, de type connu, sont prévus, sur la machine de découpe pour éliminer la décortique 13, c'est-à-dire les éléments de la bande conductrice 4 que l'on souhaite éliminer, et qui sont extraits sur un rouleau de décortique 14. La nappe 3" quant à elle, qui est alors constituée de la feuille support 1 et des pistes chauffantes 3a et 3b est alors enroulée sur un rouleau 16.

Au cours de la quatrième étape, ou étape ultime, représentée sur la figure 3d, la nappe 3" enroulée sur le rouleau 16 est admise, conjointement à la seconde feuille support 1', entre deux cylindres 18 qui assurent leur solidarisation, la nappe définitive résultante étant alors enroulée sur un rouleau 20.

On comprend qu'un tel procédé de fabrication est particulièrement intéressant dans la mesure où il peut s'effectuer sur des machines de collage et de découpe existantes en mesure d'assurer un débit particulièrement important.

Bien entendu, suivant l'invention, on pourrait avoir recours à d'autres procédés de fabrication de type continu, ou même discontinu.

La nappe souple de chauffage ainsi obtenue peut être utilisée pour chauffer aussi bien le sol ou le plafond que les parois d'un local. Son utilisation pour le chauffage du sol est particulièrement intéressante dans la mesure où il est facile de constituer une nappe qui soit totalement étanche aux liquides ou au gaz, ce qui la rend particulièrement intéressante notamment pour le chauffage des piscines

Dans le mode de mise en oeuvre représenté sur la figure 4 les feuilles support recto 1 et verso 1' de la nappe comportent des perforations longitudinales 30 et/ou transversales 32 favorisant l'adhésion de la nappe souple avec les éléments constituant d'une chape de ciment ou d'un revêtement mural.

Ainsi que représenté sur la figure 5, on facilitera la mise place des moyens de connexion entre les extrémités des pistes 3a et 3b, qui est nécessaire à l'établissement de la continuité électrique, en découpant dans l'une des feuilles support 1 ou l'un orifice 36. Ce dernier pourra être obtenu en faisant appel à un outil de découpe, manuel ou automatique, qui s'enfoncera dans la feuille sur une profondeur égale à son épaisseur, ce qui permettra ensuite de détacher la surface interne, donnant ainsi accès aux deux extrémités des éléments 3a et 3b, sur lesquels on soudera par exemple le pont conducteur 7. On peut utiliser les mêmes moyens pour assurer l'alimentation en courant électrique de la nappe sur les extrémités amont C et D de celle-ci. L'alimentation électrique pourra d'ailleurs se faire au moyen de conducteurs électriques plats, soit par exemple des tresses conductrices isolées.

On a décrit la nappe souple de chauffage suivant l'invention dans le cas de l'utilisation d'un courant diphasé faisant appel à deux bandes. Bien entendu la présente invention est applicable aux courants polyphasés et l'on fera alors appel au nombre n d'éléments de boucles nécessaires à la constitution des circuits appropriés.

L'extraction de la décortique obtenue lors du découpage de la nappe métallique pourra s'effectuer de différentes façons. On pourra tout d'abord l'arracher en effectuant une simple traction sur celle-ci.

On pourra également par exemple appliquer sur la bande métallique, après le découpage de celle-ci, une feuille souple d'arrachage réalisée en un polymère quelconque et qui comporte sur l'une de ses faces une couche de colle adhésive dont la forme correspond à celle de la décortique. L'adhésif utilisé sera choisi de façon telle que son pouvoir attractif soit supérieur à celui de l'adhésif utilisé pour fixer la bande métallique sur le film de PVC. On applique ainsi l'adhésif de la nappe d'extraction sur la décortique puis on exerce une traction sur la nappe d'extraction, préférentiellement avec une force de composante perpendiculaire à la décortique, si bien qu'au cours de cet effort, la nappe d'extraction arrache la décortique du film PVC sur laquelle elle était fixée.

Dans une variante intéressante de l'invention représentée sur la figure 6, on donnera aux pistes une géométrie telle que, de façon intermédiaire, la nappe comportera deux séries de deux pistes. Il sera alors ainsi possible d'utiliser la décortique collée sur la feuille souple d'arrachage comme une seconde nappe chauffante. On pourra à cet effet utiliser comme feuille souple d'accrochage une feuille de même nature que celle de la feuille support du film métallique. On a ainsi représenté sur la figure 6 deux séries de deux pistes, à savoir une première série constituée des pistes 3a et 3b et une seconde série constituée des pistes 3'a et 3'b. On rencontre ainsi successivement, en alternance d'une extrémité à l'autre de la nappe 1 deux premières pistes 3a de la première série, une première piste 3'a de la seconde série, une seconde piste 3b de la première série, deux secondes pistes 3'b de la seconde série, une seconde piste 3b de la première série, et une première piste 3'a de la seconde série.

Dans un autre mode de mise en oeuvre de l'invention, et afin de faciliter la découpe de la nappe métallique et éviter le caractère quelque peu élastique de la couche de PVC, on collera la nappe métallique sur un mince film non élastique notamment en polyéthylène. Une fois l'opération de découpe effectuée, on viendra coller, sur le mince film de polyéthylène, un film support plus solide et plus épais, notamment de type PVC. Il restera ensuite à revêtir le film d'aluminium découpé d'un second film support.

Ainsi que décrit précédemment, la présente nappe de chauffage suivant invention est applicable au chauffage d'un local en disposant celle-ci sur tout ou partie du sol et/ou des parois murales. Mais elle est également applicable à d'autres types de réalisation tels que par exemple le chauffage d'habitacles de véhicules. A cet effet des éléments de nappe dont la forme externe épouse celles des panneaux internes qui constituent l'intérieur de l'habitacle d'un véhicule sont disposés sur ceux-ci, ou sont disposés dans l'intérieur de ceux-ci, notamment de façon que leur élément chauffant soit disposé à faible distance de leur paroi interne.

## Revendications

1. Nappe de chauffage longitudinale souple de longueur L entre une extrémité amont (A) et une extrémité aval (B), ladite nappe comprenant une première piste et une seconde piste emprisonnées entre deux feuilles souples électriquement isolantes, lesdites pistes étant formées d'un film métallique et étant destinées à être alimentées en courant électrique pour être chauffées, lesdites pistes se distribuant périodiquement dans le sens longitudinal,
**caractérisée en ce que** :
- chaque piste comporte une extrémité amont (C, D) au niveau de l'extrémité amont (A) de la nappe et une extrémité aval (E, F) au niveau de l'extrémité aval (B) de la nappe,
- les première et seconde pistes s'étendent de façon associée transversalement sur la quasi totalité de la largeur de la nappe et
- les extrémités aval (E, F)) des deux pistes sont libres et destinées à être réunies l'une à l'autre, avant utilisation, par des moyens de connexion (7).

2. Nappe suivant la revendication 1 **caractérisée en ce que** les première et seconde pistes forment des demi-boucles successives qui sont imbriquées les unes dans les autres de façon que, dans le sens longitudinal on rencontre successivement, de l'extrémité amont à l'extrémité aval de la nappe, une première piste, puis une alternance de deux secondes pistes et deux premières pistes.

3. Nappe suivant la revendication 1 **caractérisée en ce que** les pistes forment des demi-boucles successives constituées de parties transversales et de parties longitudinales de plus faible longueur, la partie transversale de l'une des pistes étant complétée à la valeur de la largeur de la nappe par une partie transversale adjacente de l'autre piste.

4. Nappe suivant la revendication 3 **caractérisée en ce que** la configuration des pistes est telle qu'elles s'étendent de façon successive transversalement et longitudinalement d'une extrémité (A) à l'autre (B) de la nappe tout en restant parallèles entre elles.

5. Nappe suivant l'une des revendications précédentes **caractérisée en ce que** les pistes sont fixées sur au moins l'une des feuilles support souples (1,1') par des moyens adhésifs.

6. Nappe suivant la revendication 5 **caractérisée en ce que** l'adhésif utilisé est de type repositionnable.

7. Nappe suivant l'une des revendications précédentes, **caractérisée en ce que** les deux feuilles souples et isolantes (1,1') sont traversées par des lumières (30,32) disposées entre les pistes.

8. Nappe suivant l'une des revendications précédentes **caractérisée en ce que** l'une des feuilles souples et isolantes (1,1') est percée d'un orifice (3b) donnant accès à l'une des extrémités d'au moins une piste.

9. Nappe suivant la revendication 8 **caractérisée en ce que** l'orifice d'accès à une piste est destiné à la connexion électrique d'un conducteur plat sur ladite piste.

10. Nappe suivant l'une des revendications précédentes **caractérisée en ce que** le film métallique est un film d'aluminium.

11. Nappe suivant l'une des revendications précédentes **caractérisée en ce que** la largeur de la nappe est de 0,5 m.

12. Nappe suivant l'une des revendications précédentes **caractérisée en ce que** la largeur des pistes est de 2,5 cm et leur épaisseur de 0,25 mm.

13. Nappe suivant l'une des revendications précédentes **caractérisée en ce que** l'espace compris entre les pistes (3a,3b) est égal à la moitié de la largeur (e) de celles-ci.

14. Nappe suivant la revendication 13 **caractérisée en ce que** l'écartement des pistes dans le sens longitudinal est de 1,5 cm.

15. Nappe suivant l'une des revendications précédentes **caractérisée en ce que** l'écartement des pistes dans le sens transversal est de 1cm.

16. Nappe intermédiaire suivant la revendication 2 **caractérisée en ce qu'**elle comprend deux séries de pistes associées deux à deux.

17. Nappe intermédiaire suivant la revendication 16 **caractérisée en ce** l'on rencontre successivement, en alternance d'une extrémité à l'autre de la nappe :
- deux premières pistes de la première série,
- une première piste de la seconde série,
- une seconde piste de la première série,
- deux secondes pistes de la seconde série,
- une seconde piste de la première série, et
- une première piste de la seconde série.

18. Procédé de fabrication d'une nappe souple de chauffage se présentant sous la forme d'une bande longitudinale ayant une extrémité amont (A) et une extrémité aval (B) et formant un lé de largeur déterminée, comportant deux pistes conductrices (3a,3b) destinées à être alimentées en courant électrique pour être chauffées et qui sont emprisonnées entre deux feuilles support souples et isolantes électriquement (1,1'), **caractérisé en ce qu'**il comporte les étapes consistant à :
- fixer une feuille métallique souple (3) sur une feuille support souple et isolante électriquement (1),
- découper la feuille métallique (3) sur au moins son épaisseur, de façon à former dans celle-ci deux pistes chauffantes (3a,3b) qui se distribuent périodiquement dans le sens longitudinal, s'étendent de façon associée transversalement sur la quasi totalité de la largeur de la nappe et comportent une extrémité amont (C, D) au niveau de l'extrémité amont (A) de la nappe et une extrémité aval (E, F) au niveau de l'extrémité aval de la nappe (B), les extrémités amont (C,D) de ces pistes (3a,3b) étant destinées à être reliées à des bornes d'alimentation respectives en courant électrique, et les extrémités aval (E,F) de ces pistes (3a,3b) étant libres et destinées à être réunies l'une à l'autre, avant utilisation, par des moyens de connexion (7),
- éliminer la décortique (13) résultant de cette découpe,
- fixer une seconde feuille support souple (1') et isolante électriquement sur l'autre face des pistes (3a,3b) de façon que celles-ci soient prises en sandwich entre les deux feuilles support (1,1').

19. Procédé suivant la revendication 18 **caractérisé en ce que** l'on extrait la décortique en collant sur cette dernière une feuille souple d'arrachage revêtue d'une colle possédant un pouvoir adhésif supérieur à celui de la feuille métallique sur la feuille support.

20. Procédé suivant l'une des revendications 18 ou 19 **caractérisé en ce que** l'on effectue au moins l'étape de découpe à l'aide d'une machine rotative travaillant en continu.

## Claims

1. A flexible longitudinal heating mat of length L between an upstream end (A) and a downstream end (B), said mat comprising a first track and a second track confined between two electrically insulating flexible sheets, said tracks being formed with a metal film and being intended to be supplied with electric current so as to be heated, said tracks being periodically distributed in the longitudinal direction,
**characterized in that**:
- each track includes an upstream end (C, D) at the upstream end (A) of the mat and a downstream end (E, F) at the downstream end (B) of the mat,
- the first and second tracks extend transversely in an associated way over almost the whole of the width of the mat and
- the downstream ends (E, F) of both tracks are free and intended to be joined to each other before use by connecting means (7).

2. The mat according to claim 1, **characterized in that** the first and second tracks form successive half-loops which are nested into each other so that in the longitudinal direction, a first track, and then an alternation of two second tracks and two first tracks are successively encountered from the upstream end and to the downstream end of the mat.

3. The mat according to claim 1, **characterized in that** the tracks form successive half-loops consisting of transverse portions and of longitudinal portions of smaller length, the transverse portion of one of the tracks being completed to the value of the width of the mat by an adjacent transverse portion of the other track.

4. The mat according to claim 3, **characterized in that** the configuration of the tracks is such that they successively extend transversely and longitudinally from one end (A) to the other end (B) of the mat while remaining parallel to each other.

5. The mat according to any of the preceding claims, **characterized in that** the tracks are attached onto at least one of the flexible supporting sheets (1, 1') by adhesive means.

6. The mat according to claim 5, **characterized in that** the adhesive used is of the repositionable type.

7. The mat according to any of the preceding claims, **characterized in that** both flexible and insulating sheets (1, 1') are crossed by lumens (30, 32) positioned between the tracks.

8. The mat according to any of the preceding claims, **characterized in that** one of the flexible and insulating sheets (1, 1') is pierced with an orifice (3b) giving access to one of the ends of at least one track.

9. The mat according to claim 8, **characterized in that** the orifice for accessing a track is intended for the electric connection of a flat conductor on said track.

10. The mat according to any of the preceding claims, **characterized in that** the metal film is an aluminum film.

11. The mat according to any of the preceding claims, **characterized in that** the width of the mat is 0.5 m.

12. The mat according to any of the preceding claims, **characterized in that** the width of the tracks is 2.5 cm and their thickness is 0.25 mm.

13. The mat according to any of the preceding claims, **characterized in that** the space comprised between the tracks (3a, 3b) is equal to half the width (e) of the latter.

14. The mat according to claim 13, **characterized in that** the distance between the tracks in the longitudinal direction is 1.5 cm.

15. The mat according to any of the preceding claims, **characterized in that** the distance between the tracks in the transverse direction is 1 cm.

16. The intermediate mat according to claim 2, **characterized in that** it comprises two series of tracks associated two by two.

17. The intermediate mat according to claim 16, **characterized in that** are successively encountered in alternation from one end to the other of the mat:
- two first tracks of the first series,
- one first track of the second series,
- one second track of the first series,
- two second tracks of the second series,
- one second track of the first series, and
- one first track of the second series.

18. A method for making a flexible heating mat appearing as a longitudinal strip having an upstream end (A) and a downstream end (B) and forming a band with a determined width, including two conducting tracks (3a, 3b) intended to be supplied with electric current so as to be heated and which are confined between two flexible and electrically insulating supporting sheets (1, 1'), **characterized in that** it includes the steps of:
- attaching a flexible metal sheet (3) onto a flexible and electrically insulating supporting sheet (1),
- cutting the metal sheet (3) on at least its thickness, so as to form in the latter two heating tracks (3a, 3b) which are periodically distributed in the longitudinal direction, extend transversely in an associated way over almost the whole of the width of the mat and include an upstream end (C, D) at the upstream end (A) of the mat and a downstream end (E, F) at the downstream end of the mat (B), the upstream ends (C, D) of these tracks (3a, 3b) being intended to be connected to respective electric current supply terminals, and the downstream ends (E, F) of these tracks (3a, 3b) being free and intended to be joined to each other, before use, by connection means (7),
- removing the peel (13) resulting from this cut,
- attaching a second flexible and electrically insulating supporting sheet (1') on the other face of the tracks (3a, 3b) so that the latter are sandwiched between both supporting sheets 1, 1').

19. The method according to claim 18, **characterized in that** the peel is extracted by adhering onto the latter a flexible detachment sheet coated with an adhesive having greater adhesive power than that of the metal sheet on the supporting sheet.

20. The method according to any of claims 18 or 19, **characterized in that** at least the cutting step is carried out with a continuously operating rotary machine.

## Patentansprüche

1. Längslaufende flexible Heizmatte von Länge L zwischen einem vorderen Ende (A) und einem hinteren Ende (B), wobei die Matte eine erste Spur und eine zweite Spur aufweist, die zwischen zwei flexiblen, elektrisch isolierenden Bahnen gefangen sind, wobei die Spuren aus einem Metallfilm gebildet sind und dazu bestimmt sind, mit elektrischem Strom versorgt zu werden, um beheizt zu werden, wobei die Spuren periodisch in Längsrichtung verteilt sind, **dadurch gekennzeichnet, dass**:
- jede Spur ein vorderes Ende (C, D) auf Höhe des vorderen Endes (A) der Matte und ein hinteres Ende (E, F) auf Höhe des hinteren Endes (B) der Matte aufweist,
- die ersten und zweiten Spuren sich in transversal assoziierter Weise über fast die gesamte Breite der Matte erstrecken und
- die vorderen Enden (E, F) der zwei Spuren frei sind und dazu bestimmt sind, vor Gebrauch mittels Verbindungseinrichtungen (7) miteinander verbunden zu werden.

2. Matte nach Anspruch 1, **dadurch gekennzeichnet, dass** die ersten und zweiten Spuren aufeinanderfolgende Halbschleifen bilden, die ineinander verschachtelt sind, so dass man in Längsrichtung aufeinanderfolgend, von dem vorderen Ende zu dem hinteren Ende der Matte, eine erste Spur, dann eine Abfolge von zwei zweiten Spuren und zwei ersten Spuren antrifft.

3. Matte nach Anspruch 1, **dadurch gekennzeichnet, dass** die Spuren aufeinanderfolgende Halbschleifen bilden, die aus transversalen Teilen und längslaufenden Teilen geringerer Länge bestehen, wobei der transversale Teil einer der Spuren mittels eines benachbarten transversalen Teils der anderen Spur auf den Wert der Breite der Matte ergänzt wird.

4. Matte nach Anspruch 3, **dadurch gekennzeichnet, dass** die Konfiguration der Spuren derart ist, dass sie sich in sukzessiver Weise transversal und längslaufend von einem Ende (A) zum anderen (B) der Matte erstrecken, wobei sie dabei zueinander parallel bleiben.

5. Matte nach einem der vorhergehenden Ansprüche, **dadurch gekennzeichnet, dass** die Spuren auf mindestens einer der flexiblen Trägerbahnen (1, 1') durch Klebemittel befestigt sind.

6. Matte nach Anspruch 5, **dadurch gekennzeichnet, dass** der verwendete Klebstoff vom erneut positionierbaren Typ ist.

7. Matte nach einem der vorhergehenden Ansprüche, **dadurch gekennzeichnet, dass** die zwei flexiblen und isolierenden Bahnen (1, 1') von Langlöchern (30, 32) durchzogen sind, die zwischen den Spuren angeordnet sind.

8. Matte nach einem der vorhergehenden Ansprüche, **dadurch gekennzeichnet, dass** eine der flexiblen und isolierenden Bahnen (1, 1') von einer Öffnung (3b) durchdrungen ist, die einen Zugang zu einem der Enden von mindestens einer Spur ermöglicht.

9. Matte nach Anspruch 8, **dadurch gekennzeichnet, dass** die Zugangsöffnung für einen elektrischen Anschluss eines ebenen Leiters auf dieser Spur dient.

10. Matte nach einem der vorhergehenden Ansprüche, **dadurch gekennzeichnet, dass** der Metallfilm ein Aluminiumfilm ist.

11. Matte nach einem der vorhergehenden Ansprüche, **dadurch gekennzeichnet, dass** die Breite der Matte 0,5 m beträgt.

12. Matte nach einem der vorhergehenden Absprüche, **dadurch gekennzeichnet, dass** die Breite der Spuren 2,5 cm und deren Dicke 0,25 mm beträgt.

13. Matte nach einem der vorhergehenden Ansprüche, **dadurch gekennzeichnet, dass** der Raum, der sich zwischen den Spuren (3a, 3b) befindet, gleich groß wie die Hälfte der Breite (e) von diesen ist.

14. Matte nach Anspruch 13, **dadurch gekennzeichnet, dass** der Abstand der Spuren in Längsrichtung 1,5 cm beträgt.

15. Matte nach einem der vorhergehenden Anspruch, **dadurch gekennzeichnet, dass** der Abstand der Spuren in Transversalrichtung 1 cm beträgt.

16. Zwischenmatte nach Anspruch 2, **dadurch gekennzeichnet, dass** sie zwei Sätze von Spuren aufweist, die zwei zu zwei assoziiert sind.

17. Zwischenmatte nach Anspruch 16, **dadurch gekennzeichnet, dass** man, in alternierender Weise von einem Ende der Matte zum anderen, sukzessive antrifft:
- zwei erste Spuren des ersten Satzes,
- eine erste Spur des zweiten Satzes,
- eine zweite Spur des ersten Satzes,
- zwei zweite Spuren des zweiten Satzes,
- eine zweite Spur des ersten Satzes, und
- eine erste Spur des zweiten Satzes.

18. Verfahren zur Fertigung einer flexiblen Heizmatte, die in Form eines Längsbandes vorliegt, das ein vorderes Ende (A) und ein hinteres Ende (B) aufweist und eine Bahn von festgelegter Breite bildet, zwei Leiterspuren (3a, 3b) aufweist, die dazu bestimmt sind, mit elektrischem Strom versorgt zu werden, um beheizt zu werden, und die zwischen zwei flexiblen und elektrisch isolierenden Trägerbahnen (1, 1') gefangen sind, **dadurch gekennzeichnet, dass** es die folgenden Schritte umfasst:
- Befestigen einer flexiblen Metallbahn (3) auf einer flexiblen und elektrisch isolierenden Trägerbahn (1),
- Schneiden der Metallbahn (3) über mindestens ihre Dicke, so dass in ihr zwei Heizspuren (3a, 3b) erzeugt werden, die periodisch in Längsrichtung verteilt sind, sich in transversal assoziierter Weise über fast die gesamte Breite der Matte erstrecken und ein vorderes Ende (C, D) auf Höhe des vorderen Endes (A) der Bahn und ein hinteres Ende (E, F) auf Höhe des hinteren Endes der Matte (B) aufweisen, wobei die vorderen Enden (C, D) dieser Spuren (3a, 3b) dazu bestimmt sind, jeweils mit elektrischen Stromversorgungsanschlüssen verbunden zu werden, und die vorderen Enden (E, F) dieser Spuren (3a, 3b) frei sind und dazu bestimmt sind, vor Gebrauch mittels einer Verbindungseinrichtung (7) miteinander verbunden zu werden,
- Entfernen des abgeschnittenen Materials (13), das von diesem Schnittvorgang herrührt,
- eine zweite flexible und elektrisch isolierende Trägerbahn (1') wird auf der anderen Seite der Spuren (3a, 3b) befestigt, so dass diese zwischen den zwei Trägerbahnen (1, 1') sandwichartig festgehalten werden.

19. Verfahren nach Anspruch 18, **dadurch gekennzeichnet, dass** man das abgeschnittene Material entfernt, **dadurch** dass man auf dieses eine flexible Abreißbahn aufklebt, die mit einem Klebstoff beschichtet ist, dessen Haftvermögen dasjenige der Metallbahn auf der Trägerbahn übersteigt.

20. Verfahren nach einem der Ansprüche 18 oder 19, **dadurch gekennzeichnet, dass** man zumindest den Schritt des Schneidens mit Hilfe einer Rotationsmaschine durchführt, die in kontinuierlicher Weise arbeitet.
